# EUROPÄISCHE PATENTSCHRIFT

(11) **EP 2 602 216 B1**
(45) Veröffentlichungstag und Bekanntmachung des Hinweises auf die Patenterteilung: **25.03.2015**
(21) Anmeldenummer: 12188209.6
(22) Anmeldetag: 11.10.2012
(51) Int. Cl.: B65G 67/20, B65G 69/24

(54) **Logistiksystem, Übergabestation für selbiges, sowie Logistikverfahren**
Logistics system, transfer station for same, and logistics method
Système logistique, station de transmission pour celui-ci et procédé logistique

(30) Priorität: 08.12.2011 DE 102011087985
(43) Veröffentlichungstag der Anmeldung: 12.06.2013
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser

(56) Entgegenhaltungen:
- EP-A1- 2 386 506
- EP-A2- 2 151 402
- DE-A1-102010 028 821

## Beschreibung

Die Erfindung betrifft ein Logistiksystem zur Übergabe einer Plattform zu einem Fahrzeug, insbesondere einem LKW, und/oder zur Übernahme einer Plattform von dem Fahrzeug, gemäß den Merkmalen des Oberbegriffs von Anspruch 1.

Bei bereits vorhandenen Lagern oder Kommissionierungseinheiten gibt es eine Vielzahl von Andockstationen (auch als Hallentore bezeichnet), an die LKWs jeweils mit ihrer Rückseite heranfahren können, um die Güter zu übernehmen. Solche Güterlager oder Kommissionierungseinheiten bestehen in einer großen Vielzahl und häufig gibt es die Möglichkeit, dass eine Vielzahl von Fahrzeugen gleichzeitig an die Andockstationen, die jeweils in einer Gebäudewand miteinander fluchtend nebeneinander liegen, heranfährt.

So können ebenso viele LKWs andocken, wie entsprechende Andockstationen, also Gebäudewandöffnungen/Hallentore, vorhanden sind. Dabei sind diese Andockstationen meist auf der Höhe der Ladeflächen der LKWs angeordnet, damit der Lagerboden und die Ladefläche des LKWs eine Ebene bilden und der LKW z.B. durch das Befahren durch Gabelstapler ent- und beladen werden kann. Da bei dieser Art des Ent- und Beladens jeder Gabelstapler oder sonstige Transporteinrichtung lediglich eine oder einige wenige Warenpalletten transportieren kann, ist die Art des Be- und Entladens sehr zeitintensiv. Auch kann der zu be- und entladende LKW während der gesamten Zeit des Be- und Entladens nicht von der Andockstation wegbewegt werden.

Mit dem Logistiksystem des Dokuments EP 1 808 387 A2 wird ein System offenbart, bei dem die zu be- und entladende Fracht auf einer Güterplattform, auch als Plattform oder Ladungsträger bezeichnet, gelagert wird und die gesamte Plattform mitsamt der Fracht vom LKW bzw. auf den LKW in einem Arbeitsvorgang verfrachtet wird. D.h., die gesamte Platform mit den Gütern ist in einem Schritt an ein Fahrzeug übergebbar oder kann in einem Schritt von einem Fahrzeug übernommen werden.

Damit in der Praxis die Übernahme der Plattform bzw. des Ladungsträgers von dem Fahrzeug in die Übergabestation zeiteffizient ausgeführt werden kann, ist es notwendig. das Fahrzeug und insbesondere die in dem Fahrzeug befindliche Plattform fluchtend auf die Aufnahme der Übergabestation auszurichten. Dies erfolgt bei bekannten Systemen durch manuelles Rangieren des Fahrzeugs, was zeitaufwändig ist. Der vorliegenden Erfindung lag somit die Aufgabe zugrunde, ein Logistiksystem anzugeben, welches zeiteffizienter betreibbar ist.

Aus EP 2 386 506 A1 ist ein Logistiksystem zur Übergabe und/oder zur Übernahme vnn Plattformen zu und/oder von einem Fahrzeug bekannt. Das Logistiksystem weist eine Übergabestation auf, die eine Gleitplatte und auf der Gleitplatte angeordnete Aufnahmen für die zu übergebenden bzw. zu übernehmenden Plattformen aufweist. Die Gleitplatte ist oberhalb einer Bodenplatte in horizontaler Richtung zwischen mehreren Andockstationen verfahrbar. Zum Verfahren der Gleitplatte weist die Vorrichtung einen Seilantrieb mit mehreren Seilzügen auf, mittels denen die Gleitplatte entlang der Andockstationen, bewegt wird. Über Ausrichteinheiten auf der Gleitplatte können die einzelnen Aufnahmen fluchtend zur Ladefläche des LKWs ausgerichtet werden.

Des Weiteren ist aus EP 2 151 402 A2 ein Logistiksystem zur Übergabe einer Plattform zwischen einem Fahrzeug und einem Lager nach dem Oberbegriff des Anspruchs 1 offenbart. Teil des Logistiksystems ist eine Übergabestation für die Plattform, welche eine Aufnahme aufweist, auf der die Plattform zur Anlage kommt. Die Übergabestation ist dabei zwischen mehreren parallel zueinander liegenden Andockstationen verfahrbar. Zum fluchtenden Ausrichten der Aufnahme der Übergabestation zur Ladefläche des Fahrzeuges ist insbesondere eine Oberkonstruktion zu einer Unterkonstruktion um die Hochachse der Übergabestation verschwenkbar.

Die Erfindung löst die ihr zugrunde liegende Aufgabe bei einem Logistiksystem der eingangs genannten Art dadurch, dass die Mittel zum Verschwenken der Überaabestation einen ersten Antrieb zum Verfahren der Übergabestationund einen zweiten Antrieb zum Verfahren der Übergabestation aufweisen wobei die Antriebe wahlweise synchron oder asynchron steuerbar sind. Die Erfindung macht sich hierbei die Erkenntnis zunutze, dass eine Ausrichtung der Übergabestation des Logistiksystems genauer und schneller vorgenommen werden kann als das Rangieren eines Fahrzeugs, insbesondere eines LKW.Zudem wird als vorteilhaft angesehen, dass mit diesen Antriebsmitteln ein einheitliches Antriebssystem geschaffen ist, welches sowohl zum Verfahren der Übergabestation als auch zum Verschwenken (bei asynchronem Betrieb) zum Einsatz kommt, wodurch das Bereitstellen eines separaten Antriebs exklusiv zum Schwenken zusätzlich zu einem Verfahrantrieb entfällt. Dies reduziert die Wartungsbedürftigkeit und den Steueraufwand des Logistiksystems beträchtlich.

Vorzugsweise weist das Logistiksystem eine elektronische Steuereinheit auf, welche zum Steuern des ersten Antriebs und des zweiten Antriebs eingerichtet ist. Alternativ zum manuellen Steuern der Übergabestation ist hiermit ein automatisierter Fahr- und Verschwenkbetrieb realisierbar.

Die Übergabestation weist in einer bevorzugten Ausführungsform einen Positionsfinder auf, weicher mit der Steuereinheit kommunizierend verbunden und dazu ausgebildet ist, ein Signal an die Steuereinheit abzugeben, wenn die Anwesenheit eines Reflektors detektiert wird. Durch das Bereitstellen des Positionsfinders wird es dem Logistiksystem ermöglicht, die Übergabestation durch Verfahren in der horizontalen Richtung auf eine den Reflektor aufweisenden Gegenstand, vorzugsweise das Fahrzeug und besonders bevorzugt die Ladekante des Fahrzeugs auszurichten. Hierbei ist der Reflektor an dem mit dem System zusammenwirkenden Fahrzeug an einer normierten Stelle vorzugsehen, damit die Steuereinheit in der Lage ist, beim Detektieren der Anwesenheit des Reflektors die Position des Fahrzeugs relativ zu der Übergabestation zu bestimmen.

Gemäß einer weiteren bevorzugten Ausführungsform der Erfindung ist die Steuereinheit dazu eingerichtet, die Übergabestation auf Befehl in eine Richtung zu einer Andockstation hin zu verfahren, indem die Antriebe synchron gesteuert werden, und die Übergabestation zu stoppen, wenn der Positionsfinder die Anwesenheit des Reflektors detektiert.

Weiter vorzugsweise ist die Steuereinheit dazu eingerichtet, die Position der Übergabestation zu speichern, wenn der Positionsfinder die Anwesenheit des Reflektors detektiert hat. Hierbei werden vorzugsweise die Positionen des ersten Antriebs und des zweiten Antriebs erfasst und jeweils dafür repräsentative Werte in einem Speicher hinterlegt.

Vorzugsweise weist die Übergabestation zwei oder mehr Abstandssensoren auf, welche jeweils zum Erfassen eines Abstandes zu einem entfernten Objekt, vorzugsweise der Ladekante des Fahrzeugs, eingerichtet sind. Die Abstandssensoren dienen dem Zweck, nach erfolgtem Ausrichten des entfernten Objekts, beispielsweise des Fahrzeugs vor einer Andockstation zu ermitteln, ob das Objekt bzw. Fahrzeug schräg relativ zu der hinter der Andockstation vorgefahrenen Übergabestation angeordnet ist. Hierzu sind die Abstandssensoren vorzugsweise vorab auf einen Zustand "gerade" kalibriert worden.

Die Abstandssensoren sind vorzugsweise mit der Steuereinheit kommunizierend verbunden und dazu ausgebildet, jeweils ermittelte Abstandswerte an die Steuereinheit abzugeben, vorzugsweise wenn der Positionsfinder die Anwesenheit des Reflektors detektiert.

Weiter vorzugsweise ist die Steuereinheit dazu eingerichtet, mittels der an die Steuereinheit abgegebenen Abstandswerte einen Winkel zwischen der Übergabestation und dem entfernten Objekt zu berechnen. In einer bevorzugten Ausführungsform der Erfindung ist die Steuereinheit weiter dazu eingerichtet, bei einem berechneten Winkel ungleich null den ersten Antrieb und den zweiten Antrieb derart asynchron zu steuern, dass der Winkel auf null verringert wird. Vorzugsweise erfolgt die Steuerung des ersten und zweiten Antriebs derart, dass auch der Positionsfinder auf den Reflektor ausgerichtet bleibt. Durch die zusammengesetzte Bewegung des ersten und zweiten Antriebs ergibt sich also eine Schwenkbewegung um eine vertikale Achse. Die vertikale Achse ist hierbei ja nach Art der unterschiedlichen Steuerung des ersten Antriebs und des zweiten Antriebs eine stationäre Achse oder eine sich auf einer Momentanpolbahn bewegende Achse.

Gemäß einer weiteren bevorzugten Ausführungsform der Erfindung ist die Steuereinheit dazu eingerichtet, auf Befehl den ersten Antrieb und den zweiten Antrieb derart asynchron zu steuern, dass die zuvor gespeicherte Position der Übergabestation wieder eingenommen wird. Dies erfolgt besonders bevorzugt dann, wenn der Übernahme- oder Übergabevorgang zwischen Aufnahme und Fahrzeug abgeschlossen ist und die auf der Aufnahme angeordnete Plattform von der Übergabestation an das Lager übergeben werden soll. Hierzu ist die Steuereinrichtung derart eingerichtet, dass die Antriebe die ursprüngliche Schwenk-Ausrichtung der Übergabestation durch Abrufen der gespeicherten Position wieder herstellen. Vorzugsweise ist die Aufnahme in jener verfahrbereiten Position so ausgerichtet, dass die Beförderungsrichtung von der Aufnahme zu einem Übernahmebereich auf Seiten des Lagers quer zur Verfahrrichtung ausgerichtet ist.

Weiter vorzugsweise ist die Übergabestation auf einem Schienensystem verfahrbar, wobei der erste Antrieb einer ersten Schiene zugeordnet ist, und der zweite Antrieb einer zweiten Schiene zugeordnet ist. Der erste Antrieb und der zweite Antrieb weisen vorzugsweise jeweils zwei Antriebsmotoren, insbesondere elektrische Antriebsmotoren auf, die beiderseits der Aufnahme angeordnet sind.

Die Antriebsmotoren sind auf diese Weise vorzugsweise an Eckbereichen einer Tragstruktur der Übergabestation angeordnet, um beim Verfahrbetrieb der Übergabestation ein kippstabiles Bewegen zu ermöglichen.

Die Erfindung betrifft zudem eine Übergabestation.

Die Erfindung löst die ihr zugrunde liegende Aufgabe zudem durch eine Übergabestation für ein Logistiksystem zur Übergabe einer Plattform zu einem Fahrzeug, insbesondere einem LKW, und/oder zur Übernahme einer Plattform von dem Fahrzeug, wobei die Übergabestation dazu ausgebildet ist, die Plattform von einem Lager zu übernehmen oder dorthin zu übergeben, eine Aufnahme aufweist, auf der die Plattform zur Anlage kommt, wobei die Plattform zwischen dem Fahrzeug und der Aufnahme und/oder zwischen dem Lager und der Aufnahme förderbar ist, indem die Übergabestation in einer horizontalen Richtung zwischen mehreren parallel zueinander liegenden Andockstationen verfahrbar und dazu eingerichtet ist, die Plattform dort jeweils aufzunehmen oder zu übergeben, und Mittel zum Verschwenken der Übergabestation jeweils im Bereich der Andockstationen um eine vertikale Achse aufweist, wobei die Mittel zum Verschwenken der Übergabestation einen ersten Antrieb zum Verfahren der Übergabestation und einen zweiten Antrieb zum Verfahren der Übergabestation aufweisen, wobei die Antriebe wahlweise synchron oder asynchron steuerbar sind.

Vorteilhafte Weiterbildungen der erfindungsgemäßen Übergabestation ergeben sich aus den vorstehenden Erläuterungen zum erfindungsgemäßen Logistiksystem und dessen bevorzugten Ausführungsformen. Insoweit wird auf die oben stehenden Erläuterungen verwiesen.

Die Erfindung betrifft zudem ein Verfahren zur Übergabe einer Plattform zu einem Fahrzeug, insbesondere einem LKW, und/oder zur Übernahme einer Plattform von dem Fahrzeug, mittels eines Logistiksystems, nach einer der vorstehenden bevorzugten Ausführungsformen. Das erfindungsgemäße Verfahren löst die zugrunde liegende Aufgabe mit den Schritten:
- Verfahren der Übergabestation in einer Richtung, quer zur Beförderungsrichtung der Plattform zwischen Aufnahme und Lager, zwischen mehreren parallel zueinander liegenden Andockstationen, um die Plattform dort jeweils aufzunehmen oder zu übergeben
- Verschwenken der Übergabestation im Bereich der Andockstationen um eine vertikale Achse mittels eines einen ersten Antrieb zum Verfahren der Übergabestation und einen zweiten Antrieb zum Verfahren der Übergabestation wahlweise synchron oder asynchron gesteuert,
- Bringen der Plattform in Anlage mit einer Aufnahme der Übergabestation, und
- Fördern der Plattform zwischen der Aufnahme und dem Fahrzeug und/oder zwischen der Aufnahme und dem Lager.

Das erfindungsgemäße Verfahren wird vorteilhaft weitergebildet durch einen, mehrere oder sämtliche der Schritte:
Verfahren der Übergabestation mittels eines ersten Antriebs und eines zweiten Antriebs wahlweise synchron oder asynchron gesteuert, vorzugsweise mittels einer elektronischen Steuereinheit,
   - Detektieren der Anwesenheit eines Reflektors mittels eines Positionsfinders, welcher vorzugsweise mit der Steuereinheit kommunizierend verbunden ist, und Abgeben eines Signals an die Steuereinheit, wenn die Anwesenheit des Reflektors detektiert wird,
   - Verfahren der Übergabestation auf Befehl in eine Richtung zu einer Andockstation hin, indem die Antriebe synchron gesteuert werden, und Stoppen der Übergabestation, wenn der Positionsfinder die Anwesenheit des Reflektors detektiert,
   - Speichern der Position der Übergabestation, wenn der Positionsfinder die Anwesenheit des Reflektors detektiert hat,
   - Erfassen eines Abstandes zu einem entfernten Objekt, vorzugsweise der Ladekante des Fahrzeugs, mittels zwei oder mehr Abstandssensoren der Übergabestation,
   - Abgeben jeweils von den Abstandssensoren ermittelter Abstandswerte an die Steuereinheit, vorzugsweise wenn der Positionsfinder die Anwesenheit des Reflektors detektiert,
Berechnen eines Winkels zwischen der Übergabestation und dem entfernten Objekt mittels der an die Steuereinheit abgegebenen Abstandswerte,
   - Steuern des ersten Antriebs und des zweiten Antriebs bei einem berechneten Winkel ungleich null derart asynchron, dass der Winkel auf null verringert wird, und gleichzeitig der Positionsfinder auf den Reflektor ausgerichtet bleibt,
   - Steuern des ersten Antriebs und des zweiten Antriebs auf Befehl derart asynchron, dass die zuvor gespeicherte Position der Übergabestation wieder eingenommen wird, und/oder
   - Übergehen von einer asynchronen Steuerung des ersten und zweiten Antriebs zu einer synchronen Steuerung auf Befehl, sobald die zuvor gespeicherte Position der Übergabestation wieder eingenommen ist.

Im Folgenden wird die Erfindung anhand eines bevorzugten Ausführungsbeispiels unter Bezugnahme auf die beigefügten Figuren näher beschrieben. Hierbei zeigen
- Figur 1: eine räumliche Ansicht des Logistiksystems gemäß der vorliegenden Erfindung,
- Figur 2: eine Detailansicht eines Abschnitts einer Übergabestation des erfindungsgemäßen Logistiksystems,
- Figur 3: eine weitere Detailansicht des Systems aus Figur 1, und
- Figur 4: eine Seitenansicht des Systems aus Figur 1.

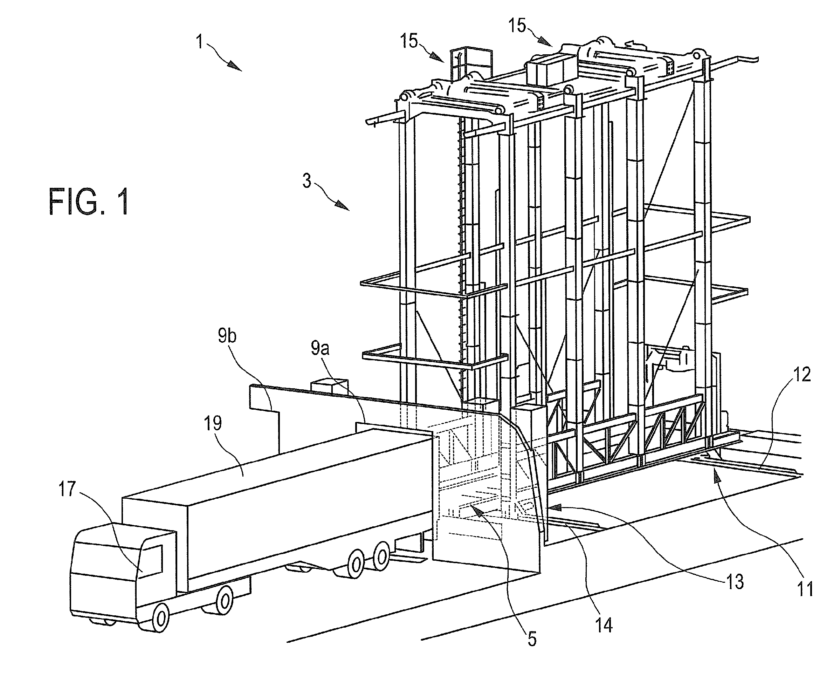

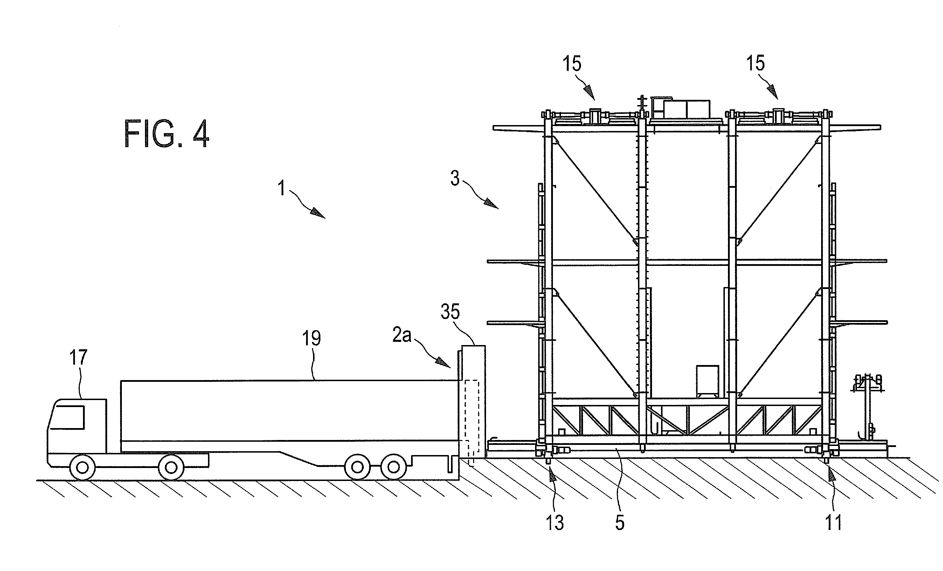

Die Figuren 1 und 4 geben eine Übersicht über ein Logistiksystem 1 gemäß der vorliegenden Erfindung. Das Logistiksystem 1 weist eine Übergabestation 3 auf, welche eine Aufnahme 5 zur Übernahme einer Plattform bzw. eines Ladungsträgers von einem Fahrzeug, und/oder zur Übergabe der Plattform oder des Ladungsträgers an ein Lager aufweist. Die Übergabestation 3 ist innerhalb einer Halle angeordnet, welche in Figur 1 angedeutet ist. Die Halle weist mehrere Andockstationen 9a, 9b auf, die jeweils eine Ausnehmung zum Annähern eines Fahrzeugs an die Übergabestation 3 aufweisen. Als Fahrzeug 17 ist beispielhaft ein LKW mit einem Anhänger 19 abgebildet. Der Anhänger 19 weist einen Innenraum mit Standardabmessungen für LKW auf, oder ist zum Tragen einer Plattform mit Abmessungen von 20-Fuß bzw. 40-Fuß Containern angepasst. Die Aufnahme 5 der Übergabestation 3 weist vorzugsweise Abmessungen auf, die zwecks Übernahme und/oder Übergabe der Plattform bzw. des Ladungsträgers an die Innenabmessungen des Fahrzeugs 17 bzw. des Anhängers 19 oder die Abmessungen der Plattform angepasst sind.

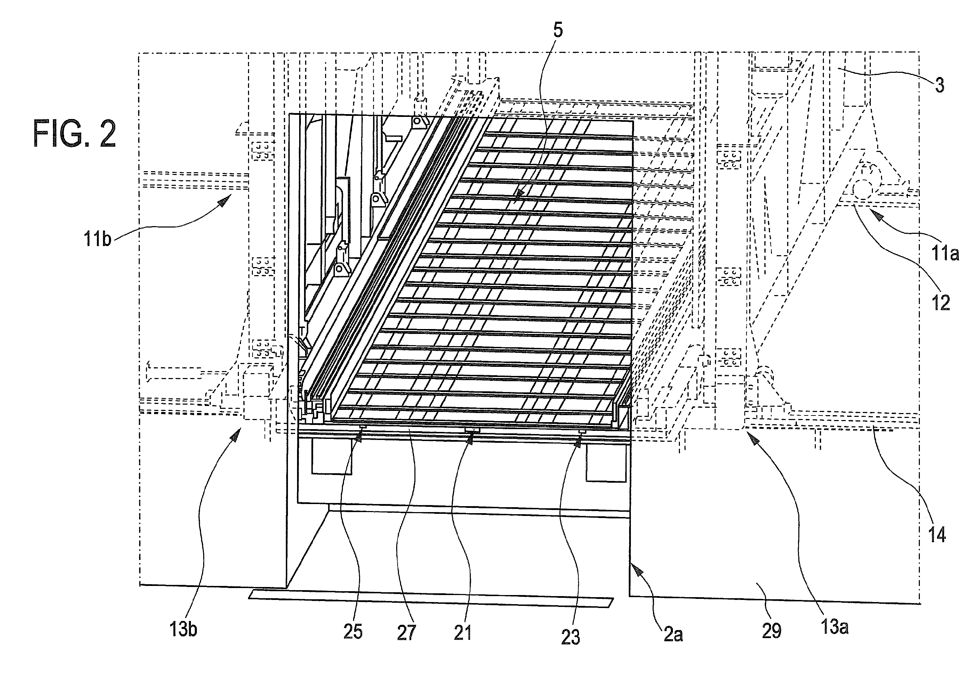

Die Übergabestation 3 ist auf zwei parallel geführten Schienen 12, 14 verfahrbar. Hierbei ist die erste Schiene 12 distal zu der Ebene der Andockstationen 9a, 9b angeordnet und wird somit als "hintere" Schiene verstanden. Die zweite Schiene 14 ist proximal zu der Ebene der Andockstationen 9a, 9b angeordnet und wird somit als "vordere" Schiene verstanden. Auf der ersten Schiene 12 ist ein erster Antrieb 11 vorgesehen. Auf der zweiten Schiene 14 ist ein zweiter Antrieb 13 vorgesehen. Siehe bezüglich des Antriebs auch Figur 2. Die Übergabestation 3 weist ferner eine Hubeinrichtung 15 auf, die zum Anheben und/oder Absenken der Aufnahme 5 eingerichtet ist.

In Figur 2 ist ein weiterer Einblick auf die Ausgestaltung der Übergabestation 3 des Logistiksystems 1 (siehe Figur 1, 4) gegeben. Die Übergabestation 3 weist im Bereich der Aufnahme 5 an einer Vorderkante 27, welche optional der Aufnahme 5 oder einem in der Höhe stationären Bauteil der Übergabestation 3 zugeordnet ist, einen Positionsfinder 21 auf. Der Positionsfinder 21 ist vorzugsweise als optische und/oder akustische Sender/Empfänger-Einheit ausgebildet. Neben dem Positionsfinder 21 sind an der Vorderkante 27 ein erster Abstandssensor 23 und ein zweiter Abstandssensor 25 angeordnet.

Der Positionsfinder 21, der Abstandssensor 23 und der Abstandssensor 25 sind im Bereich der Andockstation 9a angeordnet, wenn die Übergabestation 3 in diesen Bereich verfahren worden ist.

In der gezeigten Darstellung ist die Vorderkante 27 im Wesentlichen parallel zu einer die Andockstationen 9a, 9b und Weitere (nicht dargestellt) verbindende Vorderwand 29 ausgerichtet.

Die Übergabestation 3 wird auf der ersten Schiene 12 und der zweiten Schiene 14 durch den ersten und zweiten Antrieb 11, 13 bewegt. Der erste Antrieb 11 weist hierbei zwei elektrische Antriebsmotoren 11 a, 11 b auf, während der zweite Antrieb 13 zwei elektrische Antriebsmotoren 13a, 13b aufweist. Die elektrischen Antriebsmotoren 11a, 11b, 13a, 13b sind jeweils an Eckbereichen der Übergabestation 3 angeordnet und sorgen somit für eine kippstabile Anordnung der Übergabestation 3.

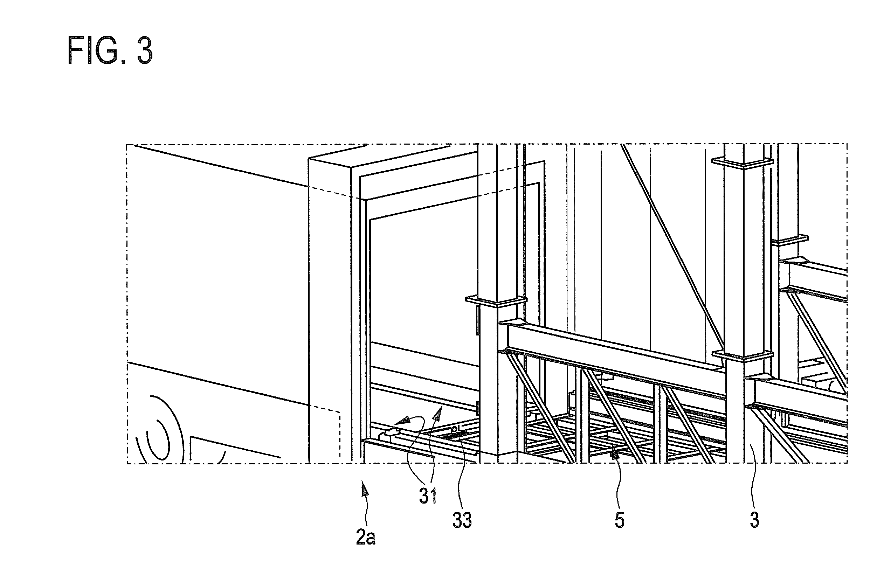

In Figur 3 ist ein Blick auf eine Andockstation 9a von der Seite der Übergabestation 3 aus gezeigt, wobei der Anhänger 19 sich in der Andockstation 9a in an die Übergabestation 3 angenäherter Position befindet. An dem Anhänger 19 ist ein Reflektor 33 angebracht. Der Reflektor 33 befindet sich vorzugsweise relativ zur Symmetrieachse des Anhängers in Längsrichtung an der gleichen Position wie der Positionsfinder 21 in Bezug auf die Symmetrieachse in Längsrichtung der Aufnahme 5 (siehe Figur 2). Auf diese Weise wird sichergestellt, dass sowohl die Aufnahme 5 als auch der Anhänger 19 im Wesentlichen mittig zur Andockstation 9a ausgerichtet werden. Im Inneren des Anhängers 19 ist ein Schienensystem 31 vorgesehen, welches ein Einführen oder Ausführen einer Plattform bzw. eines Ladungsträgers aus dem Anhänger 19 heraus bzw. in ihn hinein und in die Aufnahme 5 hinein oder aus der Aufnahme 5 heraus erleichtert.

Optional weist die Übergabestation 3 ein sogenanntes Regalbediengerät auf, welches dazu eingerichtet ist, die Plattform oder den Ladungsträger im Bereich der Ladekante des Anhängers 19 zu erfassen und zu ziehen oder zu drücken. Gemäß einer weiteren bevorzugten Alternative ist das Regalbediengerät dazu eingerichtet, die Plattform oder den Ladungsträger mittels Eingreifen in das Innere des Laderaums des Anhängers 19 zu untergreifen und zu erfassen.

Unter Bezugnahme auf die vorstehenden Figuren wird nachfolgend der Betrieb des erfindungsgemäßen Logistiksystems und der erfindungsgemäßen Übergabestation beschrieben, sowie das erfindungsgemäße Verfahren erläutert.

Zunächst wird das Fahrzeug 17 im Bereich einer Andockstation 9a bereitgestellt und an den Verladebereich, in welchen die Übergabestation 3 verfahrbar ist, angenähert. Die Übergabestation 3 wird in den Bereich der Andockstation 9a verfahren. Hierbei arbeiten die Antriebe 11a, 11b, 13a, 13b vorzugsweise im Synchronbetrieb, was ein gleichmäßiges Fortbewegen auf der ersten Schiene 12 und der zweiten Schiene 14 gewährleistet, Die Verfahrbewegung der Übergabestation 3 wird gestoppt, sobald der Positionsfinder 21 die Anwesenheit des an dem Anhänger 19 des Fahrzeugs 17 vorgesehenen Reflektors 33 detektiert. Die Position der Antriebe 11 a, 11 b, 13a, 13b wird gespeichert, vorzugsweise von einer die Verfahrbewegung steuernden elektronischen Steuereinheit.

Nach diesem ersten Ausrichten der Übergabestation 3 auf die Position des Fahrzeugs 17 bzw. des Anhängers 19 des Fahrzeugs 17 veranlasst die Steuereinheit ein Umschalten des Betriebs der Antriebe 11a, 11b, 13a, 13b in einen Asynchronbetrieb. Dies geschieht insbesondere dann, wenn die Abstandssensoren 23, 25 Abstandswerte an die elektronische Steuereinheit übermitteln, die eine Schrägstellung des Fahrzeugs bzw. des Anhängers des Fahrzeugs relativ zu der Vorderkante 27 der Übergabestation 3 repräsentieren. Die elektronische Steuereinheit berechnet den Winkel dieser Schrägstellung. Als Resultat dieser Berechnung werden Steuerbefehle generiert, die den ersten Antrieb 11 bzw. die Antriebsmotoren 11a, 11b und den zweiten Antrieb 13 bzw. die Antriebsmotoren 13a, 13b derart unterschiedlich ansteuern, dass der berechnete Winkel auf null reduziert wird. Vorzugsweise wird der Winkel durch Verfahren mittels der Antriebe 11a, 11b auf der distalen ersten Schiene 12 herbeigeführt, während die Antriebsmotoren 13a, 13b durch Verfahren auf der proximalen zweiten Schiene 14 die Position der Übergabestation 3 derart nachstellen, dass der Positionsfinder 21 stets die Anwesenheit des Reflektors 33 detektiert.

Ist der Winkel auf den Wert null verringert, ist die Aufnahme 5 der Übergabestation 3 fluchtend auf die in dem Fahrzeug 17 vorgesehene Plattform bzw. auf den Laderaum des Fahrzeugs ausgerichtet. Sodann erfolgt die Übernahme der Plattform bzw. des Ladungsträgers aus dem Fahrzeug oder die Übergabe der Plattform bzw. des Ladungsträgers an das Fahrzeug. Nach vollendeter Übernahme bzw. Übergabe werden der erste Antrieb und der zweite Antrieb auf Befehl derart asynchron gesteuert, dass die zuvor gespeicherte Position der Übergabestation wieder eingenommen wird. Hierdurch wird die Übergabestation von der Betriebsstellung "mit Fahrzeug fluchtend" wieder in die Betriebsstellung "quer zu Schienen 12, 14" bzw. "quer zur Beförderungsrichtung für das Lager" ausgerichtet. Ist diese verfahrbereite Position der Übergabestation erreicht, stellt die elektronische Steuereinheit von dem asynchronen Betrieb der Antriebe 11, 13 auf den synchronen Betrieb der Antriebe 11, 13 um. Die Übergabestation kann nunmehr die übernommene Plattform bzw. den übernommenen Ladungsträger durch Betätigen der Hubvorrichtung und Verfahren der Übergabestation entlang der Schienen 12, 14 zu einem vorbestimmten Ort verbringen, um die Plattform bzw. den Ladungsträger entweder an ein anderes Fahrzeug im Bereich einer weiteren Andockstation, beispielsweise Andockstation 9b, zu übergeben, oder um die Plattform bzw. den Ladungsträger an einen mit der Übergabestation 3 erreichbaren Lagerort zu überführen.

Der Betrieb einer Übergabestation zum Bewegen der Plattform bzw. des Ladungsträgers ist beispielsweise aus EP 2 151 402 A2 bekannt, soweit das Verladen von einem Fahrzeug zu einem anderen Fahrzeug betroffen ist. Allgemein ist der Betrieb einer solchen Übergabestation zum Bewegen von Plattformen bzw. Ladungsträgern auch aus EP 1 808 387 A2 bekannt. Auf den Inhalt der jeweiligen Anmeldungen, insbesondere auf die dortigen Figurenbeschreibungen samt beigefügten Figuren wird im Wege der Bezugnahme verwiesen.

Wenngleich die Erfindung vorstehend unter Bezugnahme auf die Übernahme und/oder Übergabe einer Plattform von bzw. zu einem Fahrzeug in Form eines LKW oder LKW-Aufliegers beschrieben worden ist, so soll an dieser Stelle betont werden, dass die Erfindung ausdrücklich zur Verwendung im Zusammenspiel mit jeglicher Art von Fahrzeugen geeignet und bestimmt ist. Insbesondere ist es auch bevorzugt, als Fahrzeug ein Schienenfahrzeug oder den Wagon eines Schienenfahrzeugs vorzusehen. Vorzugsweise ist die bzw. sind die Andockstationen jeweils zur Annäherung eines entsprechenden Fahrzeugtyps angepasst, weisen also beispielsweise ausreichend Platz in Breite und Höhe auf, um das jeweilige Fahrzeug aufnehmen zu können.

## Patentansprüche

1. Logistiksystem (1) zur Übergabe einer Plattform zu einem Fahrzeug (17), insbesondere einem LKW, und/oder zur Übernahme einer Plattform von dem Fahrzeug (17), mit
einer Plattform, welche im Wesentlichen Ausmaße aufweist, die der Ladefläche des Fahrzeugs (17) angepasst sind,
einer Übergabestation (3) zum Übernehmen der Plattform von einem Lager oder zur Übergabe dorthin, wobei die Übergabestation (3)
eine Aufnahme (5) aufweist, auf der die Plattform zur Anlage kommt, wobei die Plattform zwischen dem Fahrzeug (17) und der Aufnahme (5) und/oder zwischen dem Lager (1) und der Aufnahme (5) förderbar ist, und
in einer horizontalen Richtung zwischen mehreren parallel zueinander liegenden Andockstationen (9a, 9b) verfahrbar und dazu eingerichtet ist, die Plattform dort jeweils aufzunehmen oder zu übergeben, und
Mitteln zum Verschwenken der Übergabestation (3) jeweils im Bereich der Andockstationen (9a, 9b) um eine vertikale Achse,
**dadurch gekennzeichnet, dass** die Mittel zum Verschwenken der Übergabestation (3) einen ersten Antrieb (11) zum Verfahren der Übergabestation (3) und einen zweiten Antrieb (13) zum Verfahren der Übergabestation (3) aufweisen, wobei die Antriebe (11,13) wahlweise synchron oder asynchron steuerbar sind.

2. Logistiksystem (1) nach Anspruch 1,
**gekennzeichnet durch** eine elektronische Steuereinheit, welche zum Steuern des ersten Antriebs (11) und des zweiten Antriebs (13) eingerichtet ist.

3. Logistiksystem (1) nach einem der vorstehenden Ansprüche,
**dadurch gekennzeichnet, dass** die Übergabestation (3) einen Positionsfinder (21) aufweist, welcher mit der Steuereinheit kommunizierend verbunden und dazu ausgebildet ist, ein Signal an die Steuereinheit abzugeben, wenn die Anwesenheit eines Reflektors (33) detektiert wird.

4. Logistiksystem (1) nach Anspruch 3,
**dadurch gekennzeichnet, dass** die Steuereinheit dazu eingerichtet ist, die Übergabestation (3) auf Befehl in eine Richtung zu einer Andockstation (9a, 9b) hin zu verfahren, indem die Antriebe synchron gesteuert werden, und die Übergabestation (3) zu stoppen, wenn der Positionsfinder (21) die Anwesenheit des Reflektors (33) detektiert.

5. Logistiksystem (1) nach Anspruch 4,
**dadurch gekennzeichnet, dass** die Steuereinheit dazu eingerichtet ist, die Position der Übergabestation (3) zu speichern, wenn der Positionsfinder (21) die Anwesenheit des Reflektors (33) detektiert hat.

6. Logistiksystem (1) nach Anspruch 4 oder 5,
**dadurch gekennzeichnet, dass** die Übergabestation (3) zwei oder mehr Abstandssensoren (23, 25) aufweist, welche jeweils zum Erfassen eines Abstandes zu einem entfernten Objekt, vorzugsweise der Ladekante des Fahrzeugs (17), eingerichtet sind.

7. Logistiksystem (1) nach Anspruch 6,
**dadurch gekennzeichnet, dass** die Abstandsensoren (23, 25) mit der Steuereinheit kommunizierend verbunden und dazu ausgebildet sind, jeweils ermittelte Abstandswerte an die Steuereinheit abzugeben, vorzugsweise wenn der Positionsfinder (21) die Anwesenheit des Reflektors (33) detektiert.

8. Logistiksystem (1) nach Anspruch 7,
**dadurch gekennzeichnet, dass** die Steuereinheit dazu eingerichtet ist, mittels der an die Steuereinheit abgegebenen Abstandswerte einen Winkel zwischen der Übergabestation (3) und dem entfernten Objekt zu berechnen.

9. Logistiksystem (1) nach Anspruch 8,
**dadurch gekennzeichnet, dass** die Steuereinheit dazu eingerichtet ist, bei einem berechneten Winkel ungleich null den ersten Antrieb (11) und den zweiten Antrieb (13) derart asynchron zu steuern, dass der Winkel auf null verringert wird, und gleichzeitig der Positionsfinder (21) auf den Reflektor (33) ausgerichtet bleibt.

10. Logistiksystem (1) nach Anspruch 9,
**dadurch gekennzeichnet, dass** die Steuereinheit dazu eingerichtet ist, auf Befehl den ersten Antrieb (11) und den zweiten Antrieb (13) derart asynchron zu steuern, dass die zuvor gespeicherte Position der Übergabestation (3) wieder eingenommen wird.

11. Logistiksystem (1) nach Anspruch 10,
**dadurch gekennzeichnet, dass** die Steuereinheit dazu eingerichtet ist, auf Befehl von einer asynchronen Steuerung des ersten und zweiten Antriebs (11, 13) auf eine synchrone Steuerung überzugehen, sobald die zuvor gespeicherte Position der Übergabestation (3) wieder eingenommen ist.

12. Logistiksystem (1) nach einem der vorstehenden Ansprüche,
**dadurch gekennzeichnet, dass** die Übergabestation (3) auf einem Schienensystem verfahrbar ist, wobei der erste Antrieb (11) einer ersten Schiene (12) zugeordnet ist, und der zweite Antrieb (13) einer zweiten Schiene (14) zugeordnet ist.

13. Logistiksystem (1) nach einem der vorstehenden Ansprüche,
**dadurch gekennzeichnet, dass** der erste Antrieb (11) und der zweite Antrieb (13) jeweils zwei Antriebsmotoren (11a, 11b; 13a, 13b) aufweist, die beiderseits der Aufnahme (5) angeordnet sind.

14. Logistiksystem (1) nach einem der vorstehenden Ansprüche,
weiter umfassend das Fahrzeug (17).

15. Übergabestation (3) für ein Logistiksystem (1) zur Übergabe einer Plattform zu einem Fahrzeug (17), insbesondere einem LKW, und/oder zur Übernahme einer Plattform von dem Fahrzeug (17),
wobei die Übergabestation (3)
dazu ausgebildet ist, die Plattform von einem Lager (1) zu übernehmen oder dorthin zu übergeben,
eine Aufnahme (5) aufweist, auf der die Plattform zur Anlage kommt, wobei die Plattform zwischen dem Fahrzeug (17) und der Aufnahme (5) und/oder zwischen dem Lager (1) und der Aufnahme (5) förderbar ist, und
in einer horizontalen Richtung zwischen mehreren parallel zueinander liegenden Andockstationen (9a, 9b) verfahrbar und dazu eingerichtet ist, die Plattform dort jeweils aufzunehmen oder zu übergeben, und
Mittel zum Verschwenken der Übergabestation (3) jeweils im Bereich der Andockstationen (9a, 9b) um eine vertikale Achse aufweist,
**dadurch gekennzeichnet, dass** die Mittel zum Verschwenken der Übergabestation (3) einen ersten Antrieb (11) zum Verfahren der Übergabestation (3) und einen zweiten Antrieb (13) zum Verfahren der Übergabestation (3) aufweisen, wobei die Antriebe (11,13) wahlweise synchron oder asynchron steuerbar sind.

16. Verfahren zur Übergabe einer Plattform zu einem Fahrzeug (17), insbesondere einem LKW, und/oder zur Übernahme einer Plattform von dem Fahrzeug (17), mittels eines Logistiksystems (1), nach einem der Ansprüche 1 bis 13, umfassend die Schritte:
- Verfahren der Übergabestation (3) in einer Richtung, quer zur Beförderungsrichtung der Plattform zwischen Aufnahme (5) und Lager (1), zwischen mehreren parallel zueinander liegenden Andockstationen (9a, 9b), um die Plattform dort jeweils aufzunehmen oder zu übergeben
- Verschwenken der Übergabestation (3) im Bereich der Andockstationen (9a, 9b) um eine vertikale Achse mittels wahlweise synchronen oder asynchronen Steuerns eines ersten Antriebs (11) zum Verfahren der Übergabestation (3) und eines zweiten Antriebs (13) zum Verfahren der Übergabestation,
- Bringen der Plattform in Anlage mit einer Aufnahme (5) der Übergabestation (3), und
- Fördern der Plattform zwischen der Aufnahme (5) und dem Fahrzeug (17) und/oder zwischen der Aufnahme (5) und dem Lager.

17. Verfahren nach Anspruch 16,
umfassend einen, mehrere oder sämtliche der Schritte:
- Verfahren der Übergabestation (3) mittels eines ersten Antriebs (11) und eines zweiten Antriebs (13) wahlweise synchron oder asynchron gesteuert, vorzugsweise mittels einer elektronischen Steuereinheit,
- Detektieren der Anwesenheit eines Reflektors (33) mittels eines Positionsfinders (21), welcher vorzugsweise mit der Steuereinheit kommunizierend verbunden ist, und Abgeben eines Signals an die Steuereinheit, wenn die Anwesenheit des Reflektors (33) detektiert wird,
- Verfahren der Übergabestation (3) auf Befehl in eine Richtung zu einer Andockstation (9a, 9b) hin, indem die Antriebe (11, 13) synchron gesteuert werden, und Stoppen der Übergabestation (3), wenn der Positionsfinder (21) die Anwesenheit des Reflektors (33) detektiert,
- Speichern der Position der Übergabestation (3), wenn der Positionsfinder (21) die Anwesenheit des Reflektors (33) detektiert hat,
- Erfassen eines Abstandes zu einem entfernten Objekt, vorzugsweise der Ladekante des Fahrzeugs (17), mittels zwei oder mehr Abstandssensoren (23, 25) der Übergabestation (3),
- Abgeben jeweils von den Abstandssensoren (23, 25) ermittelter Abstandswerte an die Steuereinheit, vorzugsweise wenn der Positionsfinder (21) die Anwesenheit des Reflektors (33) detektiert,
- Berechnen eines Winkels zwischen der Übergabestation (3) und dem entfernten Objekt mittels der an die Steuereinheit abgegebenen Abstandswerte,
- Steuern des ersten Antriebs (11) und des zweiten Antriebs (13) bei einem berechneten Winkel ungleich null derart asynchron, dass der Winkel auf null verringert wird, und gleichzeitig der Positionsfinder (21) auf den Reflektor (33) ausgerichtet bleibt,
- Steuern des ersten Antriebs (11) und des zweiten Antriebs (13) auf Befehl derart asynchron, dass die zuvor gespeicherte Position der Übergabestation (3) wieder eingenommen wird, und/oder
- Übergehen von einer asynchronen Steuerung des ersten und zweiten Antriebs (11, 13) zu einer synchronen Steuerung auf Befehl, sobald die zuvor gespeicherte Position der Übergabestation (3) wieder eingenommen ist.

## Claims

1. Logistics system (1) for transferring a platform to a vehicle (17), in particular a lorry and/or for taking a platform from the vehicle (17), with a platform, which substantially has dimensions that are adapted to the loading area of the vehicle (17), a transfer station (3) for taking the platform from a warehouse or to transfer it thereto, wherein the transfer station (3) has a receiver (5), on which the platform comes to rest, wherein the platform can be conveyed between the vehicle (17) and the receiver (5) and/or between the warehouse (1) and the receiver (5), and can be moved in a horizontal direction between a plurality of docking stations (9a, 9b) located parallel to one another and is set up to receive or transfer the platform there in each case, and means for pivoting the transfer station (3), in each case, in the region of the docking stations (9a, 9b) about a vertical axis, **characterised in that** the means for pivoting the transfer station (3) have a first drive (11) to move the transfer station (3) and a second drive (13) to move the transfer station (3), wherein the drives (11, 13) can selectively be controlled synchronously or asynchronously.

2. Logistics system (1) according to claim 1, **characterised by** an electronic control unit, which is set up to control the first drive (11) and the second drive (13).

3. Logistics system (1) according to either of the preceding claims, **characterised in that** the transfer station (3) has a position finder (21), which is connected in a communicating manner to the control unit and is configured to emit a signal to the control unit when the presence of a reflector (33) is detected.

4. Logistics system (1) according to claim 3, **characterised in that** the control unit is set up to move the transfer station (3) on command in a direction toward a docking station (9a, 9b), **in that** the drives are controlled synchronously, and to stop the transfer station (3) when the position finder (21) detects the presence of the reflector (33).

5. Logistics system (1) according to claim 4, **characterised in that** the control unit is set up to store the position of the transfer station (3) when the position finder (21) has detected the presence of the reflector (33).

6. Logistics system (1) according to claim 4 or 5, **characterised in that** the transfer station (3) has two or more distance sensors (23, 25), which, in each case, are set up to detect a distance from a remote object, preferably the loading edge of the vehicle (17).

7. Logistics system (1) according to claim 6, **characterised in that** the distance sensors (23, 25) are connected in a communicating manner to the control unit and are set up to emit respectively determined distance values to the control unit, preferably when the position finder (21) detects the presence of the reflector.

8. Logistics system (1) according to claim 7, **characterised in that** the control unit is set up to calculate an angle between the transfer station (3) and the remote object by means of the distance values emitted to the control unit.

9. Logistics system (1) according to claim 8, **characterised in that** the control unit is set up, at a calculated angle unequal to zero, to asynchronously control the first drive (11) and the second drive (13) in such a way that the angle is reduced to zero, and the position finder (21) at the same time remains oriented to the reflector (33).

10. Logistics system (1) according to claim 9, **characterised in that** the control unit is set up to asynchronously control the first drive (11) and the second drive (13) on command in such a way that the previously stored position of the transfer unit (3) is adopted again.

11. Logistics system (1) according to claim 10, **characterised in that** the control unit is set up to pass on command from an asynchronous control of the first and second drive (11, 13) to a synchronous control as soon as the previously stored position of the transfer station (3) is adopted again.

12. Logistics system (1) according to any one of the preceding claims, **characterised in that** the transfer station (3) can be moved on a rail system, the first drive (11) being associated with a first rail (12) and the second drive (13) being associated with a second rail (14).

13. Logistics system (1) according to any one of the preceding claims, **characterised in that** the first drive (11) and the second drive (13) in each case have two drive motors (11a, 11b); 13a, 13b), which are arranged on both sides of the receiver (5).

14. Logistics system (1) according to any one of the preceding claims, further comprising the vehicle (17).

15. Transfer station (3) for a logistics system (1) for transferring a platform to a vehicle (17), in particular a lorry, and/or for taking a platform from the vehicle (17), wherein the transfer station (3) is configured to take the platform from a warehouse (1) or transfer it thereto, has a receiver (5), on which the platform comes to rest, wherein the platform can be conveyed between the vehicle (17) and the receiver (5) and/or between the warehouse and the receiver (5), and can be moved in a horizontal direction between a plurality of docking stations (9a, 9b) located parallel to one another and is set up to receive or transfer the platform there in each case, and means for pivoting the transfer station (3), in each case, in the region of the docking stations (9a, 9b) about a vertical axis, **characterised in that** the means for pivoting the transfer station (3) have a first drive (11) to move the transfer station (3) and a second drive (13) to move the transfer station (3), wherein the drives (11, 13) can selectively be controlled synchronously or asynchronously.

16. Method for transferring a platform to a vehicle (17), in particular a lorry, and/or for taking a platform from the vehicle (17), by means of a logistics system (1), according to any one of claims 1 to 13, comprising the steps:
- moving the transfer station (3) in a direction, transverse to the conveying direction of the platform between the receiver (5) and warehouse (1), between a plurality of docking stations (9a, 9b) located parallel to one another, in order to receive or transfer the platform there in each case
- pivoting the transfer station (3) in the region of the docking stations (9a, 9b) about a vertical axis by means of selectively synchronous or asynchronous controlling of a first drive (11) to move the transfer station (3) and a second drive (13) to move the transfer station,
- bringing the platform to abut a receiver (5) of the transfer station (3), and
- conveying the platform between the receiver (5) and the vehicle (17) and/or between the receiver (5) and the warehouse.

17. Method according to claim 16, comprising one, a plurality of or all the steps:
- moving the transfer station (3) by means of a first drive (11) and a second drive (13), controlled selectively synchronously or asynchronously, preferably by means of an electronic control unit,
- detecting the presence of a reflector (33) by means of a position finder (21), which is preferably connected in a communicating manner to the control unit, and emitting a signal to the control unit when the presence of the reflector (33) is detected,
- moving the transfer station (3) on command in a direction toward a docking station (9a, 9b), in that the drives (11, 13) are synchronously controlled, and stopping the transfer station (3) when the position finder (21) detects the presence of the reflector (33),
- storing the position of the transfer station (3) when the position finder (21) has detected the presence of the reflector (33),
- detecting a distance from a remote object, preferably the loading edge of the vehicle (17), by means of two or more distance sensors (23, 25) of the transfer station (3),
- emitting distance values respectively determined by the distance sensors (23, 25) to the control unit, preferably when the position finder (21) detects the presence of the reflector (33),
- calculating an angle between the transfer station (3) and the remote object by means of the distance values emitted to the control unit,
- asynchronously controlling the first drive (11) and the second drive (13) at a calculated angle unequal to zero in such a way that the angle is reduced to zero, and the position finder (21) at the same time remains oriented to the reflector (33),
- asynchronously controlling the first drive (11) and the second drive (13) on command in such a way that the previously stored position of the transfer station (3) is adopted again, and/or
- passing from an asynchronous control of the first and second drive (11, 13) to a synchronous control on command, as soon as the previously stored position of the transfer station (3) is adopted again.

## Revendications

1. Système logistique (1) destiné à la transmission d'une plateforme à un véhicule (17), en particulier à un camion, et/ou à la réception d'une plateforme du véhicule (17), équipé
d'une plateforme qui présente sensiblement des dimensions qui sont adaptées à la surface de chargement du véhicule (17),
d'une station de transmission (3) destinée à la réception de la plateforme depuis un entrepôt ou à la transmission à l'entrepôt, la station de transmission (3)
comprenant un dispositif de réception (5) sur lequel la plateforme vient reposer, la plateforme pouvant être transportée entre le véhicule (17) et le dispositif de réception (5) et/ou entre l'entrepôt (1) et le dispositif de réception (5), et
pouvant être déplacée dans une direction horizontale entre plusieurs stations de quai (9a, 9b) disposées parallèlement les unes aux autres et étant agencée pour respectivement y recevoir ou y transmettre la plateforme, et
de moyens destinés au pivotement de la station de transmission (3) respectivement dans la zone des stations de quai (9a, 9b) autour d'un axe vertical,
**caractérisé en ce que** les moyens destinés au pivotement de la station de transmission (3) comprennent un premier entraînement (11) destiné au déplacement de la station de transmission (3) et un second entraînement (13) destiné au déplacement de la station de transmission (3), les entraînements (11,13) pouvant être commandés au choix de manière synchrone ou asynchrone.

2. Système logistique (1) selon la revendication 1,
**caractérisé par** une unité de commande électronique qui est agencée pour la commande du premier entraînement (11) et du second entraînement (13).

3. Système logistique (1) selon l'une quelconque des revendications précédentes,
**caractérisé en ce que** la station de transmission (3) comprend un détecteur de position (21) qui est relié de manière communicante à l'unité de commande et est conçu pour fournir un signal à l'unité de commande lorsque la présence d'un réflecteur (33) est détectée.

4. Système logistique (1) selon la revendication 3,
**caractérisé en ce que** l'unité de commande est agencée pour déplacer, sur ordre, la station de transmission (3) dans une direction vers une station de quai (9a, 913), par le fait que les entraînements sont commandés de manière synchrone, et pour arrêter la station de transmission (3) lorsque le détecteur de position (21) détecte la présence du réflecteur (33).

5. Système logistique (1) selon la revendication 4,
**caractérisé en ce que** l'unité de commande est agencée pour mémoriser la position de la station de transmission (3) lorsque le détecteur de position (21) a détecté la présence du réflecteur (33).

6. Système logistique (1) selon la revendication 4 ou 5,
**caractérisé en ce que** la station de transmission (3) comprend deux capteurs de distance (23, 25) ou plus qui sont agencés chacun pour déterminer une distance à un objet éloigné, de préférence à l'arête du plateau de chargement du véhicule (17).

7. Système logistique (1) selon la revendication 6,
**caractérisé en ce que** les capteurs de distance (23, 25) sont reliés de manière communicante à l'unité de commande et sont conçus pour fournir chacun des valeurs de distance déterminées à l'unité de commande, de préférence lorsque le détecteur de position (21) détecte la présence du réflecteur (33).

8. Système logistique (1) selon la revendication 7,
**caractérisé en ce que** l'unité de commande est agencée pour calculer, au moyen des valeurs de distance fournies à l'unité de commande, un angle entre la station de transmission (3) et l'objet éloigné.

9. Système logistique (1) selon la revendication 8,
**caractérisé en ce que** l'unité de commande est agencée pour commander, en cas d'un angle calculé non égal à zéro, le premier entraînement (11) et le second entraînement (13) de manière asynchrone de sorte que l'angle soit diminué jusqu'à zéro et que, en même temps, le détecteur de position (21) reste orienté vers le réflecteur (33).

10. Système logistique (1) selon la revendication 9,
**caractérisé en ce que** l'unité de commande est agencée pour commander, sur ordre, le premier entraînement (11) et le second entraînement (13) de manière asynchrone de sorte que la position, mémorisée auparavant, de la station de transmission (3) soit reprise.

11. Système logistique (1) selon la revendication 10,
**caractérisé en ce que** l'unité de commande est agencée pour passer, sur ordre, d'une commande asynchrone des premier et second entraînements (11, 13) à une commande synchrone dès que la position, mémorisée auparavant, de la station de transmission (3) est reprise.

12. Système logistique (1) selon l'une quelconque des revendications précédentes,
**caractérisé en ce que** la station de transmission (3) peut être déplacée sur un système de rails, le premier entraînement (11) étant associé à un premier rail (12) et le second entraînement (13) étant associé à un second rail (14).

13. Système logistique (1) selon l'une quelconque des revendications précédentes,
**caractérisé en ce que** le premier entraînement (11) et le second entraînement (13) comprennent chacun deux moteurs d'entraînement (11a, 11b; 13a, 13b) qui sont disposés de chaque côté du dispositif de réception (5).

14. Système logistique (1) selon l'une quelconque des revendications précédentes, comportant en outre le véhicule (17).

15. Station de transmission (3) pour un système logistique (1) destinée à la transmission d'une plateforme à un véhicule (17), en particulier à un camion, et/ou à la réception d'une plateforme depuis le véhicule (17),
la station de transmission (3)
étant agencée pour recevoir la plateforme d'un entrepôt (1) ou pour la transmettre à l'entrepôt,
comprenant un dispositif de réception (5) sur lequel la plateforme vient reposer, la plateforme pouvant être transportée entre le véhicule (17) et le dispositif de réception (5) et/ou entre l'entrepôt (1) et le dispositif de réception (5), et
pouvant être déplacée dans une direction horizontale entre plusieurs stations de quai (9a, 9b) disposées parallèlement les unes aux autres et étant agencée pour respectivement y recevoir ou y transmettre la plateforme, et
comprenant des moyens destinés au pivotement de la station de transmission (3) respectivement dans la zone des stations de quai (9a, 9b) autour d'un axe vertical,
**caractérisée en ce que** les moyens destinés au pivotement de la station de transmission (3) comprennent un premier entraînement (11) destiné au déplacement de la station de transmission (3) et un second entraînement (13) destiné au déplacement de la station de transmission (3), les entraînements (11,13) pouvant être commandés au choix de manière synchrone ou asynchrone.

16. Procédé destiné à la transmission d'une plateforme à un véhicule (17), en particulier à un camion, et/ou à la réception d'une plateforme depuis le véhicule (17), au moyen d'un système logistique (1), selon l'une quelconque des revendications 1 à 13, comportant les étapes suivantes :
- déplacement de la station de transmission (3) dans une direction, transversalement à la direction de transport de la plateforme entre le dispositif de réception (5) et l'entrepôt (1), entre plusieurs stations de quai (9a, 9b) disposées parallèlement les unes aux autres afin respectivement d'y recevoir ou d'y transmettre la plateforme
- pivotement de la station de transmission (3) dans la zone des stations de quai (9a, 9b) autour d'un axe vertical au moyen d'une commande au choix synchrone ou asynchrone d'un premier entraînement (11) pour le déplacement de la station de transmission (3) et d'un second entraînement (13) pour le déplacement de la station de transmission,
- dépôt de la plateforme sur un dispositif de réception (5) de la station de transmission (3), et
- transport de la plateforme entre le dispositif de réception (5) et le véhicule (17) et/ou entre le dispositif de réception (5) et l'entrepôt.

17. Procédé selon la revendication 16,
comportant une, plusieurs ou l'intégralité des étapes suivantes :
- déplacement de la station de transmission (3) au moyen d'un premier entraînement (11) et d'un second entraînement (13) commandés au choix de manière synchrone ou asynchrone, de préférence au moyen d'une unité de commande électronique,
- détection de la présence d'un réflecteur (33) au moyen d'un détecteur de position (21) qui, de préférence, est relié de manière communicative à l'unité de commande, et fourniture d'un signal à l'unité de commande lorsque la présence du réflecteur (33) est détectée,
- déplacement de la station de transmission (3), sur ordre, dans une direction vers une station de quai (9a, 913) par le fait que les entraînements (11, 13) sont commandés de manière synchrone, et arrêt de la station de transmission (3) lorsque le détecteur de position (21) détecte la présence du réflecteur (33),
- mémorisation de la position de la station de transmission (3) lorsque le détecteur de position (21) a détecté la présence du réflecteur (33),
- détermination d'une distance à un objet éloigné, de préférence à l'arête du plateau de chargement du véhicule (17), au moyen de deux capteurs de distance (23, 25) ou plus de la station de transmission (3),
- fourniture, par chacun des capteurs de distance (23, 25), des valeurs de distance déterminées à l'unité de commande, de préférence lorsque le détecteur de position (21) détecte la présence du réflecteur (33),
- calcul d'un angle entre la station de transmission (3) et l'objet éloigné au moyen des valeurs de distance fournies à l'unité de commande,
- commande du premier entraînement (11) et du second entraînement (13), en cas d'un angle calculé non égal à zéro, d'une manière asynchrone de sorte que l'angle soit diminué jusqu'à zéro et que, en même temps, le détecteur de position (21) reste orienté vers le réflecteur (33),
- commande du premier entraînement (11) et du second entraînement (13), sur ordre, d'une manière asynchrone de sorte que la position, mémorisée auparavant, de la station de transmission (3) soit reprise, et/ou
- passage d'une commande asynchrone des premier et second entraînements (11, 13) à une commande synchrone sur ordre dès que la position, mémorisée auparavant, de la station de transmission (3) est reprise.
